# EUROPÄISCHE PATENTANMELDUNG

(11) **EP 0 995 555 A1**
(43) Veröffentlichungstag der Anmeldung: **26.04.2000**
(21) Anmeldenummer: 98119468.1
(22) Anmeldetag: 15.10.1998
(51) Int. Cl.: B25J 9/02, B25J 9/10, B25J 15/02

(54) **Robotarm**

(71) Anmelder: Tecan AG, 8634 Hombrechtikon (CH)
(72) Erfinder: Schinzel, Fred, 8708 Männedorf (CH)
(74) Vertreter: Wagner, Wolfgang, Dr. Phil., Dipl.-Phys.

(57) **Zusammenfassung**

Ein längs einer Schiene (2) horizontal verfahrbarer Wagen (1) trägt drei parallele, quer zur Schiene horizontal verlaufende, durch Gleichstrom-Servomotoren (8, 9, 10) drehbare Tragstangen (3, 4, 5), an welchen ein Läufer (11) über einen von einem Gleichstrom-Servomotor (22) angetriebenen Riemen (19) verschiebbar aufgehängt ist. Im Läufer (11) sind zwei vertikale Laufstangen (12, 13) verschiebbar gelagert, die an ihrem unteren Ende einen Greifer (14) tragen. Drehungen der ersten Tragstange (3) werden durch ein Verschiebegetriebe im Läufer (11), das auf am Greifer (14) befestigte Riemen (23a,b) einwirkt, in entsprechende Verschiebungen des Greifers (14) umgesetzt. Drehungen der zweiten Tragstange (4) und der dritten Tragstange (5) werden durch Winkelgetriebe im Läufer (11) in entsprechende Drehungen der Laufstangen (12, 13) umgesetzt, die im Greifer (14) weiter in Oeffnungs- und Schliessbewegungen bzw. Drehungen der Greiferzange (18) umgesetzt werden.

## Beschreibung

### Technisches Gebiet

Die Erfindung betrifft einen Robotarm gemäss dem Oberbegriff des Anspruchs 1. Derartige Geräte werden beispielsweise zum Aus- und Einladen von Probenbehältern in Laborgeräten oder auch zur Handhabung und Montage von Komponenten an Montagebändern eingesetzt.

### Stand der Technik

Gattungsgemässe Robotarme sind in vielen Ausführungen bekannt. Aus dem Propsekt 'Automatische Handhabungstechnologie' der Firma AFAG AG in CH-4950 Huttwil ist z. B. ein gattungsgemässer Robotarm bekannt, der aus zwei Linearmodulen und einem drehbaren Greifermodul zusammengesetzt ist. Die Module sind pneumatisch angetrieben, was jedoch die Auflösung und Genauigkeit, mit der bestimmte Positionen angefahren werden können, auf Werte beschränkt, die nicht für alle Anwendungen ausreichen. Die integrierten pneumatischen Antriebe erhöhen zudem das Gewicht der Module und erfordern pneumatische Verbindungen, die den Aufbau komplizieren.

### Darstellung der Erfindung

Der Erfindung liegt die Aufgabe zu Grunde, einen Robotarm zu schaffen, der sehr genau, reproduzierbar und mit hoher Auflösung verfahr- und bewegbar ist. Diese Aufgabe wird durch die Merkmale im Kennzeichen des Anspruchs 1 gelöst. Der erfindungsgemässe Robotarm ist nicht nur sehr präzise steuerbar, sondern auch verhältnismässig einfach aufgebaut.

Alle Bewegungen mehrachsig bewegbarer Teile werden von Antrieben erzeugt, die in einem ortsfesten oder lediglich längs einer Achse verschiebbaren Träger untergebracht sind und mit mechanischen Mitteln auf die besagten Teile übertragen. Das Gewicht derselben, das z. T. zwangsläufig über längere Hebelarme auf andere Bestandteile wie Halterungen oder Lager einwirkt, kann daher durchwegs niedrig gehalten werden, da sie keine eigenen mitbewegten Antriebe zu enthalten brauchen. Pneumatische oder elektrische Verbindungen, die sonst oft störend und schwer unterzubringen sind, sind daher ebenfalls nicht erforderlich.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: einen erfindungsgemässen Robotarm gemäss einem Ausführungsbeispiel in perspektivischer Darstellung,
- Fig. 2: einen Bestandteil des erfindungsgemässen Robotarms gemäss Fig. 1 mit abgenommener Abdeckung,
- Fig. 3: einen vertikalen Querschnitt durch den Bestandteil gemäss Fig. 2, längs III-III in Fig. 4,
- Fig. 4: einen vertikalen Längsschnitt gemäss IV-IV in Fig. 3,
- Fig. 5: einen vertikalen Längsschnitt durch einen weiteren Bestandteil des erfindungsgemässen Robotarms gemäss Fig. 1, längs V-V in Fig. 6 und
- Fig. 6: einen Querschnitt durch den Bestandteil gemäss VI-VI in Fig. 5.

### Wege zur Ausführung der Erfindung

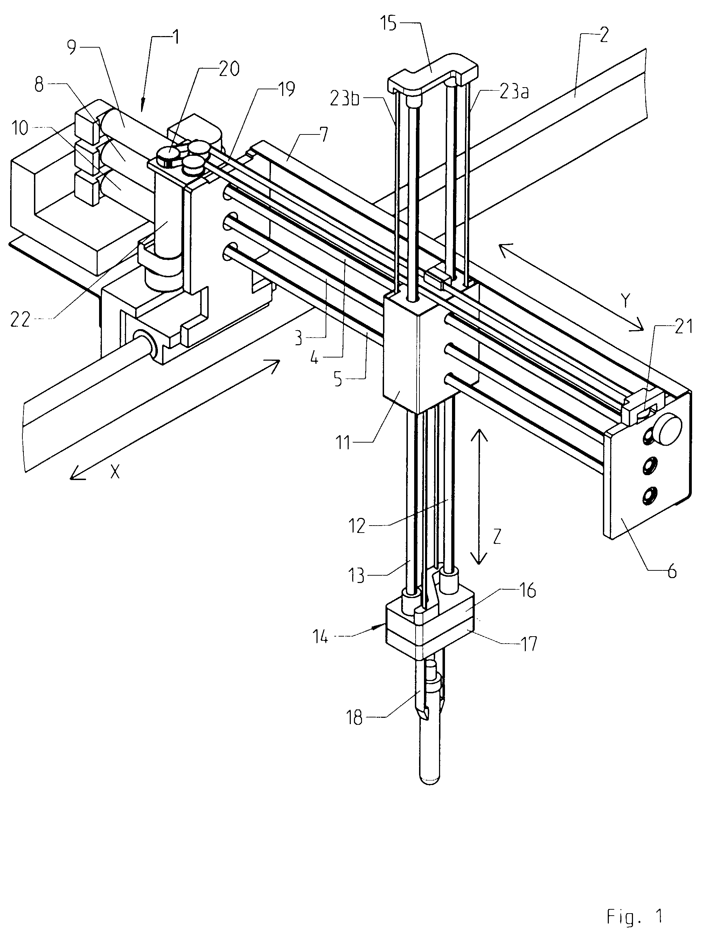

Der erfindungsgemässe Robotarm umfasst (Fig. 1) als Träger einen Wagen 1, welcher längs einer Schiene 2, die horizontal in einer x-Richtung verläuft, hin- und herverschiebbar ist. Dies kann im einfachsten Fall in an sich bekannter Weise durch einen von einer zentralen Steuereinheit gesteuerten Gleichstrom-Servomotor im Wagen 1 geschehen, der ein Ritzel antreibt, welches direkt oder über einen Zahnriemen mit einer in die Schiene 2 integrierten Zahnstange eingreift.

Der Wagen 1 trägt drei parallel untereinander angeordnete Tragstangen 3, 4, 5, die horizontal in eine y-Richtung ragen, die mit der x-Richtung einen rechten Winkel einschliesst. Ihre Enden sind in einer gemeinsamen Abschlussplatte 6, die über ein Eckprofil 7 am Wagen 1 befestigt ist, gelagert. Die Tragstangen 3, 4, 5 sind im Wagen 1 unverschieblich gelagert, doch sind sie mittels dreier von der zentralen Steuereinheit unabhängig voneinander steuerbarer Gleichstrom-Servomotoren 8, 9, 10 drehbar.

An den Tragstangen 3, 4, 5 ist ein Läufer 11 unverdrehbar und in y-Richtung verschiebbar aufgehängt. In ihm sind zwei längs einer z-Richtung, die mit der x-Richtung und der y-Richtung jeweils einen rechten Winkel einschliesst und folglich vertikal ist, beidseits der Tragstangen 3, 4, 5 durchlaufende Laufstangen 12, 13 verschiebbar und drehbar gelagert. Sie tragen an ihrem unteren Ende einen Greifer 14 und sind am entgegengesetzten oberen Ende in einem gemeinsamen Joch 15 gelagert. Der Greifer 14 weist ein oberes Greifergehäuse 16 auf, das unverschiebbar und unverdrehbar an den Enden der Laufstangen 12, 13 aufgehängt ist und mit welchem ein unteres Zangengehäuse 17, das eine nach unten ragende Greiferzange 18 trägt, drehbar verbunden ist. Die Greiferzange 18 weist zwei Greiferfinger auf, die zum Oeffnen und Schliessen der Greiferzange 18 gegeneinander verschiebbar sind.

Zur Verschiebung des Läufers 11 in y-Richtung ist derselbe an einem Trum eines als Zahnriemen ausgebildeten, oberhalb der Tragstangen 3, 4, 5 parallel zu denselben gespannten geschlossenen Riemens 19 festgemacht, welcher über zwei Umlenkrollen und ein als Zahnrad ausgebildetes Treibrad 20 am Wagen 1 läuft und an einer an der Abschlussplatte 6 gelagerten Umlenkrolle 21 umgelenkt wird. Das Treibrad 20 wird von einem Gleichstrom-Servomotor 22 angetrieben, der von der zentralen Steuereinheit gesteuert wird.

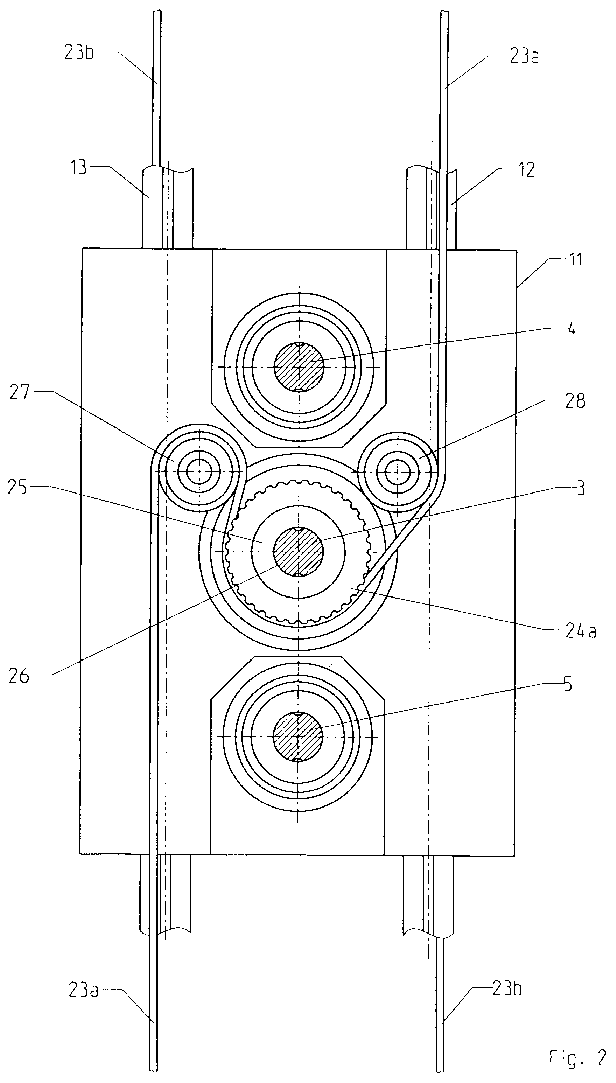

Die Verschiebung der Laufstangen 12, 13 und des Greifers 14 in z-Richtung, d. h. das Heben und Senken des Greifers geschieht mittels eines Verschiebegetriebes, welches Drehbewegungen der ersten Tragstange 3 in entsprechende Verschiebebewegungen umsetzt. Es umfasst zwei wiederum als Zahnriemen ausgebildete Riemen 23a,b, die neben den Laufstangen 12, 13 und parallel zu denselben vom Greifer 14 zum Joch 15 gespannt sind, an welchen ihre entgegengesetzten Enden jeweils befestigt sind. Das Verschiebegetriebe umfasst weiterhin zwei als Zahnräder ausgebildete Verschieberäder 24a,b (Fig. 2-4), die an den entgegengesetzten Enden einer doppelten Hülse 25 angeformt sind, die im Läufer 11 drehbar, aber unverschiebbar und an der mittig angeordneten ersten Tragstange 3 verschiebbar, aber unverdrehbar gelagert ist.

Die Lagerung an der Tragstange 3 ist durch ein Gleitkugellager hergestellt. Die erste Tragstange 3 weist zwei einander diametral gegenüberliegende in Längsrichtung durchgehende Nuten auf, welchen gleichgerichtete, in Längsrichtung begrenzte Nuten an der Innenseite der die erste Tragstange 3 aufnehmenden Durchführungsöffnung 26 der Hülse 25 gegenüberliegen. In den beiden jeweils von einander gegenüberliegenden Nuten gebildeten Kanälen sind jeweils mehrere Kugeln angeordnet, deren Durchmesser nur geringfügig unter dem des Kanals liegt, so dass sie eine formschlüssige Verbindung zwischen der ersten Tragstange 3 und der Hülse 25 herstellen, welche bezüglich gegenseitiger Verdrehung dieser Teile nur sehr geringes Spiel zulässt, sodass sich Drehungen der ersten Tragstange 3 mit grosser Präzision auf die Hülse 25 und damit die Verschieberäder 24a,b übertragen, aber einer Verschiebung der Hülse 25 längs der Tragstange 3 nur sehr wenig Widerstand entgegensetzt.

Der Riemen 23a ist (Fig. 2) oben über eine links oberhalb des Verschieberades 24a angeordnete erste Umlenkrolle 27 geführt, dann unten um das Verschieberad 24a, mit dem er eingreift und anschliessend unten um eine rechts oberhalb des Verschieberads 24a angeordnete zweite Umlenkrolle 28, welche den seitlichen Abstand des Riemens 23a von den Tragstangen 3, 4, 5 einstellt. Aufgrund dieser Führung des Riemens 23a greift derselbe über einen Winkel von annähernd 180° mit dem Verschieberad 24a ein, was einen schlupffreien Kontakt ohne lokale Ueberlastung des Riemens 23a sicherstellt. Die Führung des Riemens 23b über das Verschieberad 24b ist genau analog.

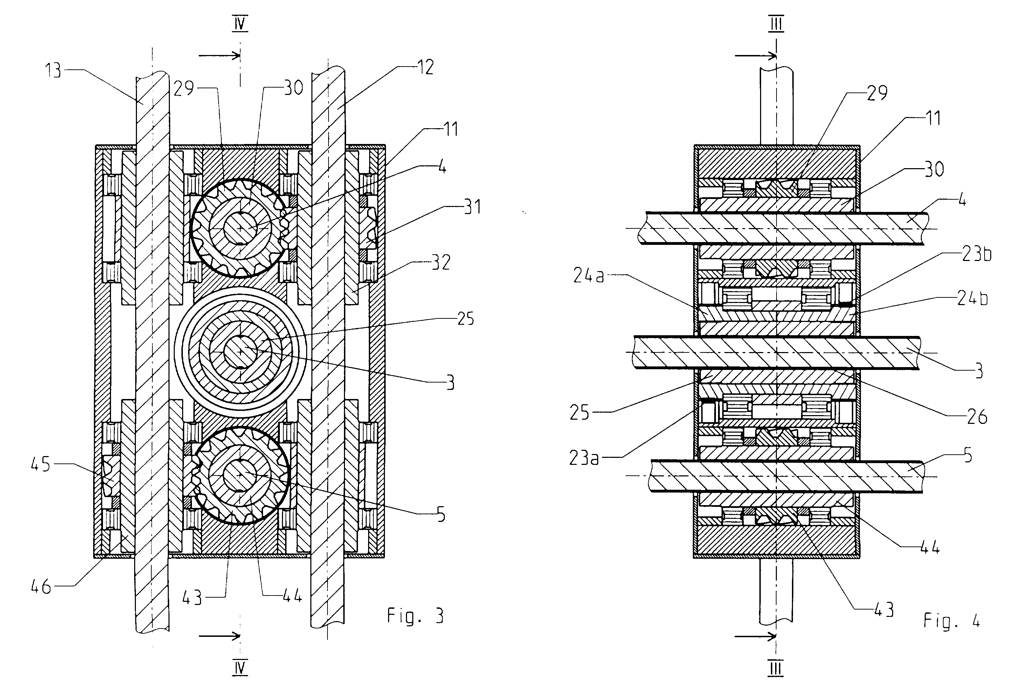

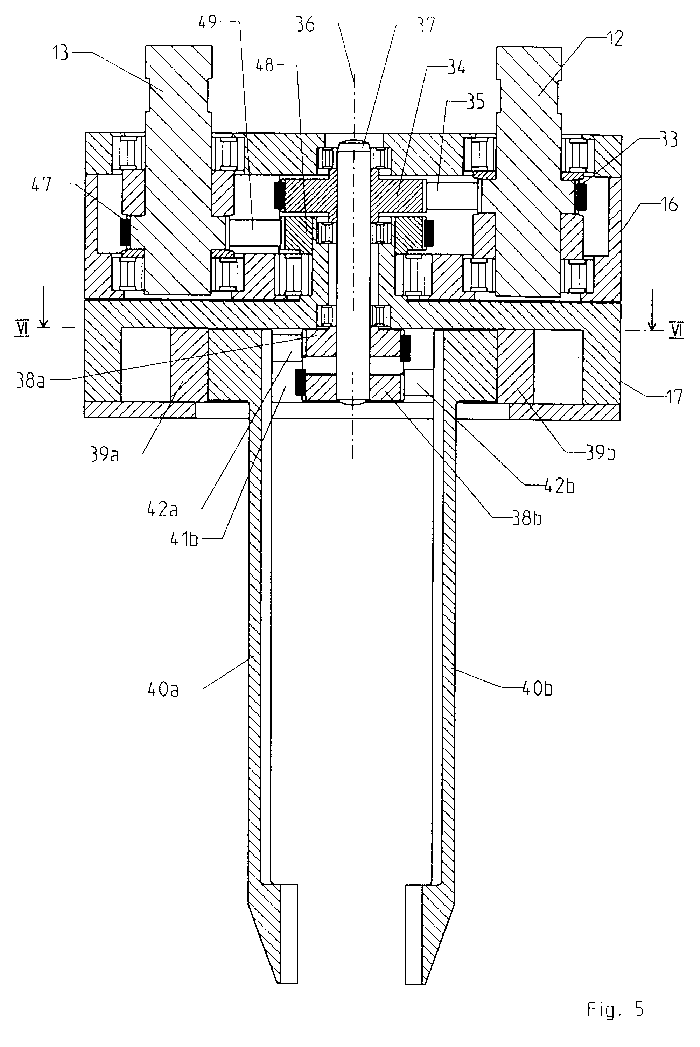

Das Oeffnen und Schliessen der Greiferzange 18 erfolgt über ein erstes Winkelgetriebe im Läufer 11 und ein Greifergetriebe im Greifer 14. Das erste Winkelgetriebe setzt Drehungen der zweiten Tragstange 4 in entsprechende Drehungen der ersten Laufstange 12 um. Es umfasst (Fig. 3, 4) ein erstes Schraubenrad 29, das über eine Hülse 30, auf die es mittig aufgesetzt ist, an der dritten Tragstange 4 gelagert ist und ein zweites Schraubenrad 31, das in gleicher Weise über eine Hülse 32 an der ersten Laufstange 12 gelagert ist. Die Schraubenräder 29, 31 stehen miteinander im Eingriff. Die Hülsen 30, 32 sind an der zweiten Tragstange 4 bzw. an der ersten Laufstange 12 in genau gleicher Weise gelagert wie die Hülse 25 an der ersten Tragstange 3.

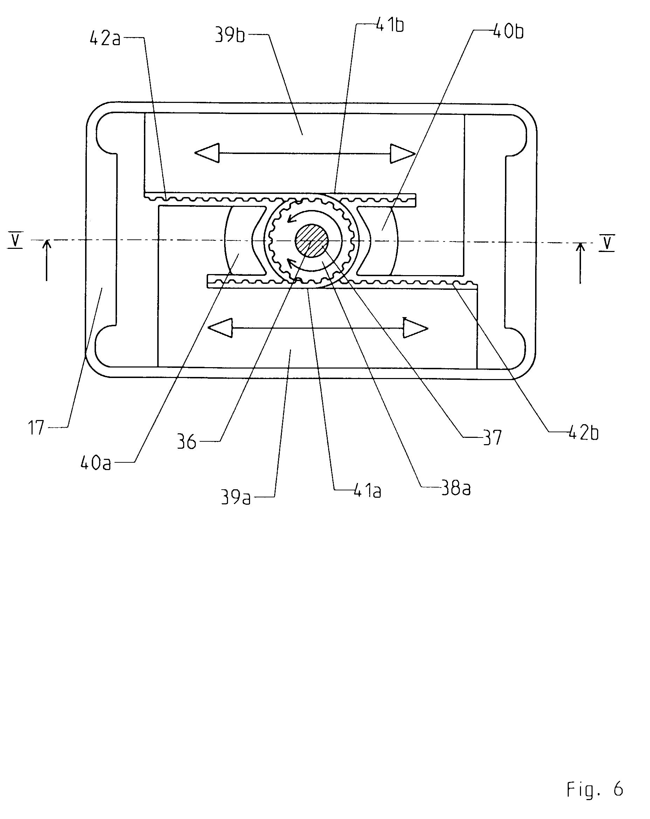

Das Greifergetriebe setzt Drehungen der ersten Laufstange 12 in entsprechende Oeffnungs- und Schliessbewegungen der Greiferzange 18 um. Es umfasst (Fig. 5, 6) ein in der Nähe des unteren Endes der ersten Laufstange 12 angeformtes, als Zahnrad ausgebildetes Greiferrad 33 und ein Greiferritzel 34, über die ein geschlossener Zahnriemen 35 läuft. Das Greiferritzel 34 sitzt nahe dessen oberem Ende unverdrehbar auf einem um eine in z-Richtung verlaufende Drehachse 36 drehbar im Greifergehäuse 16 gelagerten Greiferbolzen 37, der aus dem Greifergehäuse 16, in welchem die bisher genannten Teile des Greifergetriebes angeordnet sind, in das unten anschliessende Zangengehäuse 17 ragt, wo er an seinem unteren Ende ein erstes Zahnrad 38a und ein zweites Zahnrad 38b trägt. Die Zahnräder 38a,b sind gleich ausgebildet - insbesondere weisen sie gleichen Durchmesser auf - und koaxial und unverdrehbar am Greiferbolzen 37 befestigt, so dass an ihrer Stelle auch ein einziges breiteres Zahnrad eingesetzt werden kann.

Im Zangengehäuse 17 sind ein erster Schieber 39a und ein zweiter Schieber 39b, welche die Greiferfinger 40a,b tragen, parallel zueinander quer zur z-Richtung verschiebbar gelagert. Sie weisen den zwischen ihnen liegenden Zahnrädern 38a,b parallele gerade Flanken 41a,b zu. Ein erster Zahnriemen 42a ist an einem dem Greiferfinger 40a zunächst liegenden Vorderende von dessen Flanke 41a am ersten Schieber 39a befestigt und liegt bis zum ersten Zahnrad 38a an derselben an. Dort wird er umgelenkt, wobei er über einen Winkel von 180° mit dem ersten Zahnrad 38a eingreift und läuft dann an derselben anliegend zum Hinterende der Flanke 41b des zweiten Schiebers 39b, wo er an demselben befestigt ist.

In ganz entsprechender Weise läuft ein zweiter Zahnriemen 42b vom Hinterende der Flanke 41a des ersten Schiebers 39a, wo er befestigt ist, an derselben anliegend bis zum zweiten Zahnrad 38b, wo er ebenfalls, allerdings mit umgekehrtem Drehsinn bezüglich der Drehachse 36, um 180° umgelenkt wird und weiter an der Flanke 41b des zweiten Schiebers 39b bis zu deren dem Greiferfinger 40b zunächst liegenden Vorderende läuft, wo er wiederum befestigt ist. Der Abstand zwischen den beiden Flanken 41a, 41b entspricht gerade dem Durchmesser der Zahnräder 38a,b und der doppelten Dicke der Zahnriemen 42a,b. Die Anordnung ist, abgesehen von der Höhenversetzung der Zahnräder 38a,b und der Zahnriemen 42a,b, bezüglich der Drehachse 36 spiegelsymmetrisch.

Eine Verdrehung des Zangengehäuses 17 relativ zum Greifergehäuse 16 erfolgt über ein zweites Winkelgetriebe im Läufer 11 und ein Drehgetriebe im Greifer 14. Das zweite Winkelgetriebe, das Drehbewegungen der dritten Tragstange 5 in entsprechende Drehbewegungen der zweiten Laufstange 13 umsetzt, ist (Fig. 3, 4) mit einem ersten Schraubenrad 43, das auf einer an der dritten Tragstange 5 gelagerten Hülse 44 sitzt und einem mit demselben eingreifenden zweiten Schraubenrad 45 auf einer an der zweiten Laufstange 13 gelagerten Hülse 46 genau gleich aufgebaut wie das erste Winkelgetriebe.

Das Drehgetriebe setzt Drehbewegungen der zweiten Laufstange 13 in solche des Zangengehäuses 17 um, das um die gleiche Drehachse 36 wie der Greiferbolzen 37 drehbar am Greifergehäuse 16 gelagert ist. Es umfasst (Fig. 5) ein in der Nähe des unteren Endes der zweiten Laufstange 13 angeformtes, als Zahnrad ausgebildetes Drehrad 47 und ein Drehritzel 48, über die ein geschlossener Zahnriemen 49 läuft. Das Drehritzel 48 ist unverdrehbar mit dem Zangengehäuse 17 verbunden und koaxial mit dem Greiferbolzen 37, der durch eine zentrale Oeffnung in demselben hindurch das Greiferritzel 34 mit den Zahnrädern 38a,b verbindet. Das Drehrad 47 und das Drehritzel 48 weisen jeweils gleichen Durchmesser auf wie das Greiferrad 33 bzw. das Greiferritzel 34.

Soll nun ein bestimmter, durch Werte X, Y, Z für die x-, y- und z-Koordinaten gekennzeichneter Punkt von der Greiferzange 18 angefahren werden, so wird (Fig. 1) der Wagen 1 durch den entsprechenden Gleichstrom-Servomotor in an sich bekannter Weise längs der Schiene 2 verfahren, bis die x-Koordinate mit dem Sollwert X übereinstimmt. Die y-Koordinate wird mit dem Sollwert Y in Uebereinstimmung gebracht, indem durch den Gleichstrom-Servomotor 22 das Treibrad 20 angetrieben und dadurch der Riemen 19 bewegt wird, der den Läufer 11 mitnimmt und längs der Tragstangen 3, 4, 5 verschiebt. Die Einstellung der z-Koordinate auf den Sollwert Z erfolgt schliesslich mittels des Gleichstrom-Servomotors 8, der die erste Tragstange 3 dreht, welche dabei (Fig. 2) die Verschieberäder 24a,b im Läufer 11 mitnimmt. Dadurch werden die über die Verschieberäder geführten Riemen 23a,b in z-Richtung verschoben und nehmen den Greifer 14, die Laufstangen 12, 13 und das Joch 15 mit.

Auch das Oeffnen und Schliessen der Greiferzange 18 wird vom Wagen 1 aus bewerkstelligt. Wird etwa (Fig. 3) die zweite Tragstange 4 vom Gleichstrom-Servomotor 9 im - von der Abschlussplatte 6 her gesehen - Gegenuhrzeigersinn gedreht, so wird dies vom ersten Winkelgetriebe im Läufer 11 in eine proportionale Drehung der ersten Laufstange 12 im - vom Joch 15 her gesehen - Uhrzeigersinn umgesetzt. Diese Drehung teilt sich im Greifergetriebe (Fig. 5) über das Greiferrad 33, den Riemen 35 und das Greiferritzel 34 dem Greiferbolzen 37 mit, der sie auf die Zahnräder 38a,b überträgt. Die Drehung der Zahnräder 38a und 38b im Uhrzeigersinn wird (Fig. 6) über den ersten Zahnriemen 42a in eine Bewegung des zweiten Schiebers 39b nach rechts bzw. über den zweiten Zahnriemen 42b in eine Bewegung des ersten Schiebers 39a nach links umgesetzt, so dass sich die Greiferfinger 40a und 40b auseinanderbewegen und die Greiferzange 18 sich öffnet. In entsprechender Weise führt eine entgegengesetzte Drehung der zweiten Tragstange 4 durch den Gleichstrom-Servomotor 9 zu einer Schliessbewegung der Greiferzange 18. Die Verschiebung der Greiferfinger 40a,b ist stets dem Drehwinkel der zweiten Tragstange 4 proportional.

In ähnlicher Weise werden Drehungen der Greiferzange 18 vom Wagen 1 aus bewirkt, indem die dritte Tragstange 5 durch den Gleichstrom-Servomotor 10 gedreht wird. Eine Drehung im Uhrzeigersinn wird (Fig. 3) durch das zweite Winkelgetriebe im Läufer 11 in eine Drehung im Uhrzeigersinn der zweiten Laufstange 13 von proportionalem Drehwinkel umgesetzt. Das Drehgetriebe (Fig. 5) setzt diese Drehung über das Drehrad 47, den Zahnriemen 49 und das Drehritzel 48 in eine proportionale Drehung des Zangengehäuses 17 um. Die Drehung der zweiten Laufstange 13 wird dabei leicht untersetzt, da der Durchmesser des Drehritzels 48 etwas grösser ist als derjenige des Drehrades 47. Damit die Drehung des Zangengehäuses 17 keine Verschiebung der Greiferfinger 40a,b in demselben bewirkt, muss der Greiferbolzen 37 mitgedreht werden. Dies geschieht durch eine genau entsprechende Ausgleichsdrehung der ersten Laufstange 12, die in genau entsprechender Weise untersetzt wird. Da das erste Winkelgetriebe und das zweite Winkelgetriebe einander genau entsprechen und auch das gleiche Uebersetzungsverhältnis, z. B. 1:1 aufweisen, wird die Ausgleichsdrehung des Greiferbolzens 37 durch eine der Drehung der zweiten Tragstange 4 im Drehwinkel genau entsprechende und im Drehsinn entgegengesetzte Ausgleichsdrehung der dritten Tragstange 5 bewirkt.

Die beschriebenen Bewegungen, Verschiebung des Wagens 1 in x-, des Läufers 11 in y- und des Greifers 14 in z-Richtung sowie das Oeffnen und Schliessen sowie Drehen der Greiferzange 18 können nacheinander oder bei geeigneter zentraler Steuereinheit auch gleichzeitig ausgeführt werden.

In der Ausbildung insbesondere einzelner Teile sind diverse Abwandlungen möglich, ohne dass der Rahmen der Erfindung verlassen würde. Beispielsweise können statt der Gleichstrom-Servomotoren auch andere steuer- oder regelbare Elektromotoren eingesetzt werden, insbesondere Schrittmotoren. Die Trag- und Laufstangen können anders ausgebildet sein als beschrieben, z. B. eine andere Zahl von Nuten aufweisen. Entscheidend ist, dass sie zur Uebertragung von Drehmomenten geeignet sind. Auch bei den Winkelgetrieben sind natürlich andere Ausführungen denkbar, etwa Schneckengetriebe.

### Bezugszeichenliste

- 1: Wagen
- 2: Schiene
- 3, 4, 5: Tragstangen
- 6: Abschlussplatte
- 7: Eckprofil
- 8, 9, 10: Gleichstrom-Servomotoren
- 11: Läufer
- 12, 13: Laufstangen
- 14: Greifer
- 15: Joch
- 16: Greifergehäuse
- 17: Zangengehäuse
- 18: Greiferzange
- 19: Riemen
- 20: Treibrad
- 21: Umlenkrolle
- 22: Gleichstrom-Servomotor
- 23a, 23b: Riemen
- 24a, 24b: Verschieberäder
- 25: Hülse
- 26: Durchführungsöffnung
- 27, 28: Umlenkrollen
- 29: Schraubenrad
- 30: Hülse
- 31: Schraubenrad
- 32: Hülse
- 33: Greiferrad
- 34: Greiferritzel
- 35: Zahnriemen
- 36: Drehachse
- 37: Greiferbolzen
- 38a, 38b: Zahnräder
- 39a, 39b: Schieber
- 40a, 40b: Greiferfinger
- 41a, 41b: Flanken
- 42a, 42b: Zahnriemen
- 43: Schraubenrad
- 44: Hülse
- 45: Schraubenrad
- 46: Hülse
- 47: Drehrad
- 48: Drehritzel
- 49: Zahnriemen

## Patentansprüche

1. Robotarm zum gesteuerten Aufnehmen und Ablegen von Gegenständen, mit einem Träger, an welchem über mindestens zwei parallele Tragstangen (3, 4, 5) ein Läufer (11) in einer y-Richtung verschiebbar aufgehängt ist, an welchem wiederum über mindestens zwei parallele Laufstangen (12, 13) ein Greifer (14) mit einer Greiferzange(18), welche mindestens zwei zum Oeffnen und Schliessen derselben gegeneinander bewegliche Greiferfinger (40a, 40b) umfasst, in einer z-Richtung quer zur y-Richtung verschiebbar aufgehängt ist, **dadurch gekennzeichnet, dass** die mindestens zwei Tragstangen (3, 4, 5) drehbar im Träger gelagert sind und der Läufer (11) ein Verschiebegetriebe enthält, welches Drehungen einer ersten Tragstange (3) in entsprechende Bewegungen des Greifers (14) in z-Richtung umsetzt sowie ein erstes Winkelgetriebe, welches Drehungen einer zweiten Tragstange (4) in Bewegungen einer ersten Laufstange (12) umsetzt, welche im Greifer (14) mittels eines Greifergetriebes in Oeffnungs- und Schliessbewegungen der Greiferzange (18) umgesetzt werden.

2. Robotarm nach Anspruch 1, **dadurch gekennzeichnet, dass** Träger als Wagen (1) ausgebildet ist, der längs einer sich in einer x-Richtung quer zur y-Richtung und quer zur z-Richtung erstreckenden raumfesten Schiene (2) verfahrbar ist.

3. Robotarm nach Anspruch 1 oder 2, **dadurch gekennzeichnet, dass** die Tragstangen (3, 4, 5) jeweils im Träger unverschieblich gelagert sind.

4. Robotarm nach Anspruch 3, **dadurch gekennzeichnet, dass** der Läufer (11) mittels eines mit ihm verbundenen in y-Richtung doppelt geführten und am Träger antreibbaren Riemens (19), welcher an den vom Wagen (1) abgewandten Enden der Tragstangen (3, 4, 5) umgelenkt ist, längs der Tragstangen (3, 4, 5) verschiebbar ist.

5. Robotarm nach einem der Ansprüche 1 bis 4, **dadurch gekennzeichnet, dass** die Laufstangen (12, 13) verschieblich im Läufer (11) gelagert sind und der Greifer (14) unverschieblich an denselben aufgehängt ist.

6. Robotarm nach Anspruch 5, **dadurch gekennzeichnet, dass** das Verschiebegetriebe mindestens einen am Greifer (14) befestigten Riemen (23a, 23b) umfasst, welcher mit der ersten Tragstange (3) derart in Wirkverbindung steht, dass Drehungen der ersten Tragstange (3) über den mindestens einen Riemen (23a, 23b) in entsprechende Verschiebungen des Greifers (14) bezüglich des Läufers (11) umgesetzt werden.

7. Robotarm nach Anspruch 6, **dadurch gekennzeichnet, dass** das Verschiebegetriebe ein unverdrehbar mit der ersten Tragstange (3) verbundenes Verschieberad (24a, 24b) umfasst, über welches der Riemen (23a; 23b) vom Greifer (14) zu den vom Greifer (14) abgewandten Enden der Laufstangen (12, 13), wo er befestigt ist, läuft.

8. Robotarm nach einem der Ansprüche 1 bis 7, **dadurch gekennzeichnet, dass** das erste Winkelgetriebe ein an der zweiten Tragstange (4) unverdrehbar gelagertes erstes Schraubenrad (29) umfasst und ein unverdrehbar an der ersten Laufstange (12) gelagertes zweites Schraubenrad (31), das mit dem ersten Schraubenrad (29) eingreift.

9. Robotarm nach einem der Ansprüche 1 bis 8, **dadurch gekennzeichnet, dass** das Greifergetriebe mindestens einen einen Greiferfinger (40a) tragenden, quer zur z-Richtung verschiebbar gelagerten ersten Schieber (39a) umfasst sowie ein erstes Zahnrad (38a) und ein zweites Zahnrad (38b) gleichen Durchmessers, welche um eine gemeinsame Drehachse (36) drehbar neben dem Schieber (39a) angeordnet sind und mit der ersten Laufstange (12) derart in Wirkverbindung stehen, dass Drehungen derselben jeweils in entsprechende Drehungen der Zahnräder (38a, 38b) umgesetzt werden und dass über das erste Zahnrad (38a) ein von einem Vorderende des ersten Schiebers (39a) ausgehender erster Zahnriemen (42a) läuft und über das zweite Zahnrad (38b) in bezüglich der Drehachse (36) umgekehrtem Drehsinn ein von einem Hinterende des ersten Schiebers (39b) ausgehender zweiter Zahnriemen (42b), so dass Drehungen der Zahnräder (38a, 38b) in entsprechende Verschiebungen des ersten Schiebers (39a) umgesetzt werden.

10. Robotarm nach Anspruch 9, **dadurch gekennzeichnet, dass** der erste Schieber (39a) an einer dem ersten Zahnrad (38a) und dem zweiten Zahnrad (38b) zugewandten Seite eine gerade Flanke (41a) aufweist, an welcher der erste Zahnriemen (42a) zwischen dem Vorderende des ersten Schiebers (39a) und dem ersten Zahnrad (38a) und der zweite Zahnriemen (42b) zwischen dem Hinterende des ersten Schiebers (39a) und dem zweiten Zahnrad (38b) jeweils anliegen.

11. Robotarm nach Anspruch 9 oder 10, **dadurch gekennzeichnet, dass** das Greifergetriebe einen quer zur z-Richtung verschiebbar gelagerten zweiten Schieber (39b) umfasst und der vom Vorderende des ersten Schiebers (39a) ausgehende erste Zahnriemen (42a) am ersten Zahnrad (38a) umgelenkt und zum Hinterende des zweiten Schiebers (39b) geführt ist und der vom Hinterende des ersten Schiebers (39a) ausgehende zweite Zahnriemen (42b) am zweiten Zahnrad (38b) umgelenkt und zum Vorderende des zweiten Schiebers (39b) geführt ist, so dass die Verschiebungen des zweiten Schiebers (39b) jeweils denjenigen des ersten Schiebers (39a) entgegengesetzt sind.

12. Robotarm nach einem der Ansprüche 9 bis 11, **dadurch gekennzeichnet, dass** das Greifergetriebe ein Greiferritzel (34) umfasst sowie einen Greiferbolzen (37), an welchem dasselbe und die Zahnräder (38a, 38b) befestigt sind und das Greiferritzel (34) mit der ersten Laufstange (12) derart in Wirkverbindung steht, dass Drehungen derselben in entsprechende Drehungen des Greiferritzels (34) umgesetzt werden.

13. Robotarm nach einem der Ansprüche 1 bis 12, **dadurch gekennzeichnet, dass** er mindestens eine dritte Tragstange (5) umfasst, welche parallel zur ersten Tragstange (3) drehbar im Träger gelagert ist und über ein im Läufer (11) angeordnetes zweites Winkelgetriebe, das Drehungen der dritten Tragstange (5) in entsprechende Drehungen der zweiten Laufstange (13) umsetzt, mit der zweiten Laufstange (13) in Wirkverbindung steht und der Greifer (14) ein Drehgetriebe aufweist, das Drehungen der zweiten Laufstange (13) in entsprechende Drehungen der Greiferzange (18) umsetzt.

14. Robotarm nach einem der Ansprüche 8 bis 12 und Anspruch 13, **dadurch gekennzeichnet, dass** das zweite Winkelgetriebe in seinem Aufbau dem ersten Winkelgetriebe entspricht.

15. Robotarm nach Anspruch 13 oder 14, **dadurch gekennzeichnet, dass** der Greifer (14) ein unverdrehbar an den beiden Laufstangen (12, 13) abgestütztes Greifergehäuse (16) umfasst sowie ein Zangengehäuse (17), in welchem die Greiferfinger (40a, 40b) der Greiferzange (18) verschiebbar gelagert sind und welches drehbar am Greifergehäuse (16) gelagert ist, während das Drehgetriebe ein unverdrehbar mit dem Zangengehäuse (17) verbundenes Drehritzel (48) umfasst sowie ein unverdrehbar mit der zweiten Laufstange (13) verbundenes Drehrad (47), mit dem das Drehritzel (48) derart in Wirkverbindung steht, dass Drehungen des Drehrades (47) in entsprechende Drehungen des Drehritzels (48) umgesetzt werden.

16. Robotarm nach den Ansprüchen 12 und 15, **dadurch gekennzeichnet, dass** der Greiferbolzen (37) das Greiferritzel (34) durch das Drehritzel (48), durch das er koaxial durchgeführt ist, hindurch mit den Zahnrädern (38a, 38b) verbindet.
